(19) Europäisches Patentamt
European Patent Office
Office européen des brevets

(11) **EP 3 978 553 A1**

(12) # EUROPEAN PATENT APPLICATION

(43) Date of publication:
**06.04.2022  Bulletin 2022/14**

(21) Application number: **21200852.8**

(22) Date of filing: **05.10.2021**

(51) International Patent Classification (IPC):
**C08J 3/24** (2006.01)

(52) Cooperative Patent Classification (CPC):
**C08J 3/24; C08J 3/243;** C08J 2300/21;
C08J 2331/00; C08J 2333/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **05.10.2020  IT 202000023443**

(71) Applicant: **ProLab Materials S.r.l**
**10122 Torino (IT)**

(72) Inventors:
• **PIOVANO, Daniele**
  **10122 TORINO (IT)**
• **PIOVANO, Roberto**
  **10122 TORINO (IT)**

(74) Representative: **Karaghiosoff, Giorgio
Alessandro**
**c/o Praxi Intellectual Property S.p.A. - Savona
Via F. Baracca 1R, 4° piano
"Il Gabbiano"
17100 Savona (IT)**

(54) ## SEQUENTIAL INTERPENETRATING OR SEMI-INTERPENETRATING POLYMER NETWORK AND PROCESS TO OBTAIN IT

(57)    The present invention relates to a process for the production of a sequential interpenetrating polymer network or a sequential semi-interpenetrating polymer network effective to reduce shrinkage and limit exothermy when used as or comprised within a composition for the coating of surfaces or for the impregnation of a sheath for relining. A further object of the present invention is a sequential interpenetrating polymer network or a sequential semi-interpenetrating polymer network which can be obtained by said process. The present invention also relates to the use of said sequential interpenetrating polymer network or a sequential semi-interpenetrating polymer network as an adhesive, sealant, substrate, preferably surfaces, coating, dipping resin, casting resin, impregnating resin, preferably for impregnating socks for relining, laminating resin, matrix resin, mold resin and a combination thereof.

## Description

## TECHNICAL FIELD

The present invention is part of the sector of photo-crosslinkable materials by UV/visible light and relates to a sequential interpenetrating or semi-interpenetrating polymeric network and a process for obtaining it, said network being effective in reducing shrinkage and limiting exothermy when used as or comprised within a composition for coating substrates or for impregnating a sheath for relining.

## PRIOR ART

At the current state of the art, photosensitive materials, in particular materials that can be photo-crosslinked by UV/visible light, are used in the most different technological sectors such as for instance in the formulation of sealing compositions, compositions for coating surfaces (for instance building surfaces of the industrial or civil type), impregnating resins (for instance for the impregnation of sheaths for relining), lamination resins, resins for molds etc. However, in the event that there is the need to crosslink large masses or in the event that the thickness of the various layers of photo-crosslinkable material exceed a certain value, generally half a millimeter, there are several drawbacks that limit their performance and possible applications.

Among the various problems that are still encountered today in the use of photo-crosslinkable materials using UV/visible light are:

- the high final shrinkage that creates deformations and/or tensions which, in particular in the case of adhesive materials, can be very inconvenient as they can significantly limit the adhesion force of said materials on the substrates;

- the high exothermy that develops in a short time following UV/visible irradiation and which involves high thermal peaks in exponential correlation with the quantities of material to be crosslinked. In this regard, the greater the amount of material to be crosslinked, the greater the exothermy developed by the reaction, up to any damage to heat-sensitive supports and/or damage to the material itself;

- the high exothermy developed during and following the photo-crosslinking which also determines a fast increase in the initial volume of the mass of the material being crosslinked. Said increase, in relation to the linear expansion coefficient, is due to the temperature reached by the mass and to the consequent thermal expansion;

- the fast decrease in the volume of the mass of crosslinked material during the subsequent cooling of the mass, which can create further internal tensions. In the current state of the art, various solutions have been developed to try to reduce the thermal peak and the shrinkage of the photo-crosslinkable materials during crosslinking. For instance, one of the most used solutions is to introduce inert charges such as fillers, which, by decreasing the percentage of reactive mass and decreasing the volumetric shrinkage, help to remove the reaction heat. However, this approach is severely limited, especially in the case of technologies that exploit photo-crosslinking with UV/visible light, by some important factors, first of all the refractive index of said charges which, creating a light shielding effect that irradiates the mass during crosslinking, completely prevents its passage and/or leads to a decrease in the depth that can be reached by the light, thus resulting in a decrease in the crosslinking depth. Another drawback is connected to the fact that a high addition of inert charges can greatly interfere with the chemical-physical characteristics of the material. The addition of inert charges can, for instance, modify the rheological characteristics of the composition by increasing, for instance, its viscosity and thus making it difficult to impregnate felts or other types of matrices with the composition itself. The inert charges can also modify the mechanical characteristics of the composition, generally worsening the flexural and tensile strength characteristics of the resulting final materials once the crosslinking of these compositions is completed. Finally, it is also important to consider that inert charges can decrease the final chemical and/or thermal resistances of the resulting materials.

Another approach commonly known in the current state of the art to try to reduce the thermal peak and the exothermy density per time unit, is the addition of plasticizers and/or other types of nonreactive diluents. In this case, in fact, the viscosity of the composition can advantageously become lower and therefore favorable in many applications.

However, even in this case, the worsening of the thermal, chemical and mechanical characteristics is strongly marked and results in an overall worsening of performance. Therefore, the need remains in the sector to provide a method to reduce shrinkage and limit exothermy in the case of photo-crosslinkable by UV/visible light materials, preferably in the case where said materials are masses having a thickness greater than 1 millimeter.

The present invention solves the critical issues known in the sector by providing a process for the production of a sequential interpenetrating polymer network or a sequential semi-interpenetrating polymer network. Such a sequential interpenetrating or semi-interpenetrating polymeric network, when used for instance as a coating composition or as a composition for the impregnation of a sheath for relining, allows to decrease the thermal peak, decrease the thermal expansion and the subsequent thermal shrinkage, without significantly changing the viscosities involved and without affecting the performance in terms of mechanical, chemical, thermal resistance and the penetration of light radiation.

From document CN108753228 a glue is known consisting of a combination of an acrylic resin with an epoxy resin said system curing with a double polymerization action consisting of a first polymerization step of the acrylic resin with UV light and a subsequent polymerization step of the epoxy resin by thermal activation.

While the polymerization step by UV radiation has reduced times of the order of one minute, the second polymerization step by heating requires relatively high temperatures of at least 100°C which can generally be reached only by using a heating oven. The times required for complete polymerization and therefore to finish the polymerization step by heating are of the order of several tens of minutes, for instance about 30 minutes.

From document WO2005/056675 a curing composition by double polymerization action is known. A first action takes place by exposure to UV radiation, while the second step is blocked, i.e. latent and is released only later on when heat is provided to an oven in which a sufficient temperature is reached to start the mechanism of crosslinking of the second component.

A composition used for the preparation of a prepreg is known from WO03/011971. According to this document, the composition, i.e. the substrate impregnated with said composition, is exposed on both sides in succession for 10-40 seconds to a 7 300 W mercury vapor halogen lamp (actinic radiation) . The composition also comprises as a further third component which is already present at the origin of the same, or which is already present in the composition together with the two components and is not added later, a hardener which is blocked/latent, i.e. inactive. and needs a heat input to be activated and give rise to the second cross-linking step by means of the action of the hardener. Also, in this case the heating to the hardener activation temperature requires to be performed in a suitable oven.

From US 2007/205528 a cationic/radical system is known which includes a composition which is stored in a mold before UV curing. The compounds in the table are self-explanatory. The system is applied with a very low thickness of a few microns. Complete crosslinking occurs in two independent steps because the hardener of the second step is of the click curing type where a catalyst (generally a tertiary amine) is generated through photoexposure, which acts as a catalyst in the thiol-epoxide reaction. In this reaction there is no interdependence of the steps due to the reaction temperature because the proposed system is for 3D stereolithography and concerns the construction of single layers of minimum thickness (a few microns) (Fourier's law) .

A composition that is cross-linkable according to a two-step process can foresee that the two cross-linking steps are activated in a truly independent way, such as, for instance, a system with cationic photoinitiators and radical photoinitiators which is first exposed to light of a wavelength such as to trigger only the radical reaction and then, subsequently, by means of a separate and delayed exposure to light at a frequency such as to initiate the secondary cationic reaction is described in documents US10106643 and US7923121. In this case the composition has at least two components which are crosslinked respectively in a first step and in a second step by exposure to a radiation such as actinic light having different frequencies for the first and second step. The polymeric matrix of the composition is thus divided into two steps which react separately and in a totally independent way in order to activate them by a light having different frequencies, so that the crosslinking process takes place by double exposure to light radiation respectively at at least a first frequency and at at least a second frequency different from each other.

From the paper Park YJ et al:"UV-and thermal-curing behaviors of dual curable adhesives based on epoxyacrylate oligomers" International Journal of Adhesion and Adhesives, Elsevier, Amsterdam, NL, vol. 29, no.7, 1 October 2009, pages 710-717, ISSN: 0143-7496, DOI: 10.1016/J.IJADHADH.2009.02.001 dual curing systems are known, wherein two initiators are provided, with the second being always thermally blocked/latent and requiring that after a first step of photoinduced crosslinking, a second crosslinking step of the same molecule (bisphenol A acrylic ester) takes place with a thermal activation in the oven of a blocked/latent peroxide, said second crosslinking step having the purpose of completing and optimizing the result of the first photo-crosslinking step.

## SUMMARY OF THE INVENTION

It is an object of the present invention a process for the production of a sequential interpenetrating polymer network or a sequential semi-interpenetrating polymer network comprising the steps of:

i) providing a composition comprising:
a component a) photo-crosslinkable by actinic light irradiation to which a composition comprising a component is added a component b) crosslinkable by addition and mixing of at least one curing compound; said component b) being characterized by having a crosslinking time shift as compared to component a) (curing shifting time) such that the exothermic emission curves of components a) and b) have a partial or no overlap;

ii) impregnating or coating a substrate and/or fill one or more cavities thereof with the composition of step i) or in any case applying the composition of step i) on a substrate;

iii) irradiating the composition of step i) or, optionally, the substrate of step ii) with an actinic light source for a time ≥ 1 second, preferably comprised between 1 second and 60 minutes;

mixing said at least one curing compound to the composition, said at least curing compound activating a crosslinking step of component b) at room temperature and wherein said crosslinking step of compound b) induced by said curing compound has a predetermined time duration (Pot-life);

while said mixing of step iv) takes place before or after step ii) and/or with a crosslinking time shift as compared to component a) (curing shifting time) such that the exothermic emission Gaussian curves of the components a ) and b) have partial or no overlap.

A further object of the present invention is a sequential interpenetrating polymer network or a sequential semi-interpenetrating polymer network which can be obtained with said process.

A further object of the present invention also relates to the use of said sequential interpenetrating polymer network or a sequential semi-interpenetrating polymer network as an adhesive, sealant, lining (coating) of substrates, preferably industrial- or civil-type building surfaces, dipping resin, casting resin, impregnating resin, preferably for impregnating sheaths for relining, laminating resin, matrix resin, mold resin and a combination thereof.

It is evident from above that the process and the system according to the most general embodiment of the present invention provide for the use of a two-component system in which the first step is activated by the light and the second part is not photoactive and is activated by the simple action of adding the hardener to the composition comprising the two components a) and b). This addition has to take place shortly before the application to the substrate according to one or more of the embodiments and variants described above and below, and therefore it is not possible to materially formulate a single-component product but the hardener at room temperature is always supplied and formulated as a separate component of the system to be mixed by the applicator "*in situ*".

The formulated system acts in part by photo-crosslinking and is completed by simple addition of the hardener at room temperature and therefore does not require any other unblocking mechanism.

In particular, the process and the system according to the present invention do not require an unblocking of the second crosslinking step by means of thermal energy and in particular of heat, thus excluding the need to operate with ovens. This is advantageous since in some applications, such as for instance the relining of pipes, it is not possible to carry out the second step of heat input in an oven since the pipe is firmly anchored to the installation site.

In the present invention it is the hardener that is added to the composition to start the crosslinking of the non-photoinitiated part and this can only consist of a so-called two (or more) component system which can be stored in separate containers and which have to be mixed carefully before application.

The hardener is immediately active at room temperature and can be fast, slow or extra slow but not "latent or blocked".

The system implemented by the invention leads to the formulation of two-component products, i.e. packaged separately from each other and in which the two steps of one of the two components, i.e. components a) and b) of the composition, crosslink the first with light and the second by simple addition and mixing of the active hardener at room temperature. The system does not need additional external energy to crosslink the secondary step and the whole system achieves complete crosslinking even of the non-photoactive step with the simple passage of time without any further additional action.

## BRIEF DESCRIPTION OF THE FIGURES

Figure 1 shows a diagram of a system according to the state of the art which consists of a composition comprising at least one component a) and at least a second component b) of a single-component composition or comprising a single common container, according to the definitions of present description, and wherein the crosslinking takes place in two steps by double exposure with radiation having different frequencies.

Figure 2 shows a diagram of a system according to the state of the art which consists of a composition comprising at least one component a) and at least a second component b) of a single-component composition or comprising a single common container according to the definitions of the present description, and in which the crosslinking takes place in two steps by means of a first photo-crosslinking step and a second heat input step for the activation of a blocked/latent and thermally unblockable (latent) crosslinking initiator.

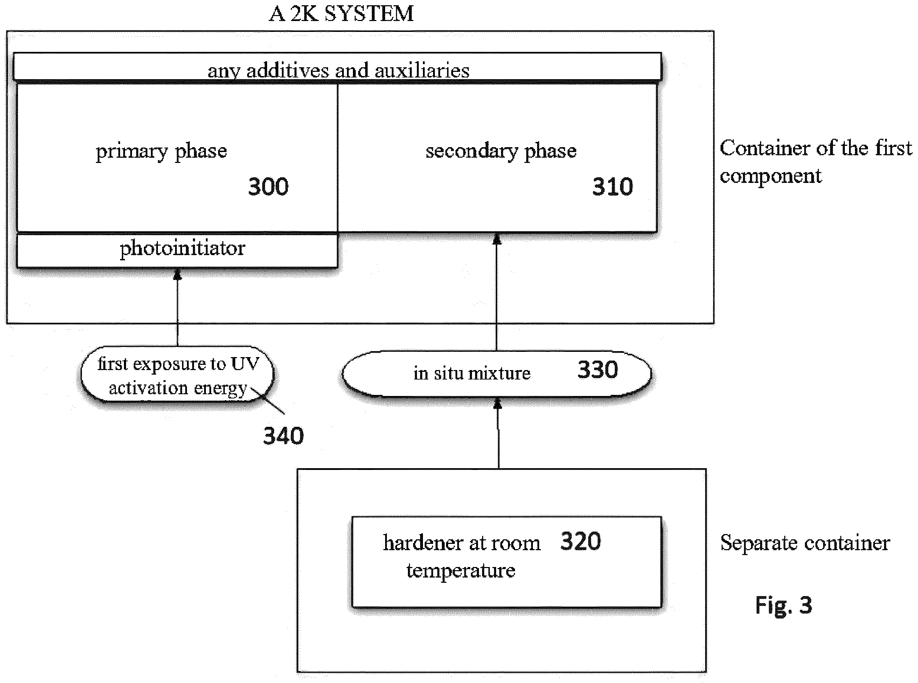

Figure 3 shows a schematic diagram of a system according to the present invention which consists of a composition comprising at least one component a) and at least a second component b) of a two-component composition or comprising a single common container for the composition and a second separate container or a separate compartment of the single container according to the definitions of the present description, and wherein the crosslinking takes place in two steps by means of a two-step system, the first always with photo-activated crosslinking and the second activated by addition of a hardener which acts at room temperature and which is provided in said second container and/or in the separate and dedicated compartment of the first container for the composition.

Figure 4 shows an example of an exothermic emission curve of a crosslinking reaction.

Figures 5 and 6 respectively show a picture of an infrared thermogram according to two different enlargements of two samples wherein the sample R1 according to the state of the art and the sample R3 according to the present invention.

Figures 7 and 8 show two pictures of the two samples R1 and R3 according to the definition of the previous Figures 4 and 5 which show the comparison of the deformations due to shrinkage of the two samples.

Figure 9 shows a picture of the two samples R1 and R3 in which the lesions due to internal tensions that are generated during crosslinking and cooling due to the excessive thermal peak in sample R1 are evident according to the known art.

Figure 10 shows a picture of the result of the shrinkage test performed with two samples S1 and S2 relating to a composition according to the present invention and according to the state of the art.

## DETAILED DESCRIPTION OF THE INVENTION

For the purposes of the present invention, the term "sequential interpenetrating polymer network - IPN" refers to a polymer comprising two or more polymer networks that are at least partially intertwined on a molecular scale but not linked covalently with each other and that cannot be separated unless chemical bonds are broken. Said interpenetrating sequential polymeric network is prepared by means of a process in which the network of the second polymer is formed after the formation of the network of the first.

For the purposes of the present invention, the expression "sequential semi-interpenetrating polymer network - SIPN" means a polymer comprising at least one or more polymer networks and at least one or more linear or branched polymers characterized in that the at least one polymeric network is at least partially penetrated, on a molecular scale, by the at least one or more linear or branched polymers. Said semi-interpenetrating sequential polymer network is prepared through a process in which at least one or more linear or branched polymers are formed after the formation of at least one or more polymer networks.

Unlike an interpenetrating sequential polymer network, a semi-interpenetrating sequential polymer network is characterized by the fact that the at least one or more linear or branched polymers can be, theoretically, separated from the at least one or more polymer networks without breaking chemical bonds.

For the purposes of the present invention, the term "actinic light" or "actinic radiation" indicates an electromagnetic radiation having a wavelength between 100 and 600 nm. With "broad spectrum UV lamp" we mean, for the purposes of the present invention, a lamp that emits electromagnetic radiation having a wavelength greater than 200 nm, preferably comprised between 200 and 650 nm. With "UV LED" we mean, for the purposes of the present invention, a light emitting diode in the wavelengths between 300 and 600 nm. With "(photo) activatable with/by actinic light" we mean, for the purposes of the present invention, a composition which, following irradiation with an actinic light source, crosslinks thus becoming a "photo-crosslinked polymeric composition". For the purposes of the present invention, therefore, the aforesaid "(photo) activatable with/by actinic light" compositions are also referred to as "photo-crosslinking" compositions. Similarly, for the purposes of the present invention, the expressions "crosslinkable resin by the action of a photoinitiator which can be activated by actinic light" and the expression "photo crosslinkable resin" are used as synonyms.

With "photoactivable photoinitiator compound" we mean, for the purposes of the present invention, a chemical compound which, following irradiation with an actinic light source, allows the activation and propagation of polymerization reactions by generating reactive species or generators of crosslinkers (Lewis acids, superbases etc.).

With "curing compound" we mean a curing agent which cooperatively contributes to the crosslinking of the composition, in particular to the crosslinking of the non-crosslinkable part of the composition (component b).

For the purposes of the present invention, the term "resin" is intended to include both polymers and monomers and oligomers.

For the purposes of the present invention, the term "sheath for relining" is used as a synonym for "sock for relining".

The present invention relates to a process for the production of a sequential interpenetrating polymer network or a sequential semi-interpenetrating polymer network comprising the steps of:

i) providing a composition comprising:

a component a) photo-crosslinkable by actinic light irradiation to which is added a composition comprising a component b) crosslinkable by addition such as for instance mixing of at least one curing compound;

said component b) being characterized by possessing a curing shifting time as compared to component a) such that the exothermic emission Gaussian curves of components a) and b) have a partial or no overlap;

ii) impregnating or coating a substrate and/or filling one or more cavities thereof with the composition of step i) or in any case applying on a substrate the composition of step i);

iii) irradiating the composition of step i) or the substrate of step ii) with an actinic light source for a time $\geq$ 1 second, preferably comprised between 1 second and 60 minutes, more preferably comprised between 1 minute and 60 minutes, more preferably comprised between 1 minute and 50 minutes, even more preferably comprised between 10 and 40 minutes;

iv) mixing said at least one curing compound to the composition, said at least curing compound activating a crosslinking step of component b) at room temperature and wherein said crosslinking step of compound b) induced by said curing compound has a predetermined time duration (Pot-life);

while said mixing of step iv) takes place before or after step ii) and/or with a curing shifting time as compared to component a) such that the exothermic emission Gaussian curves of the components a) and b) have partial or no overlap.

Preferably, said component b) is added to said component a) immediately before using the composition of step i), or before the next step ii) or it is already mixed from origin with component a) in a common container.

Without being linked to a specific theory, the Applicant has found that the use of said component a) that can be photo-crosslinked by actinic light irradiation and of said component b) that can be crosslinked by the action of at least one curing compound, and for which cross-linking begins at the act of mixing with said compound b) or with the composition of a hardener which already acts at room temperature, allows to cure the composition of step i) in two steps and with different times.

According to a preferred embodiment of the invention, said component b) is characterized by having a curing shifting time as compared to component a) such that the exothermic emission Gaussian curves of components a) and b) have an overlap between 0 and 30%, preferably between 0 and 10%, more preferably between 0 and 5% in which 0% indicates no overlap while the aforementioned percentage values other than 0% and up to 30%, preferably up to 5%, indicate a partial overlap.

In other words, said component b) is characterized by having a curing shifting time as compared to component a) such that the Gaussian curve representing the reaction kinetic temperatures of component a) does not intersect (overlap equal to 0%) or minimally intersects (partial overlap up to 30%, preferably up to 5%) with the ascending part of the Gaussian curve representing the reaction kinetic temperatures of component b). Apart from a characteristic of the exothermic emission curve intrinsic to the material, the staggering of the exothermic emission peaks of the two components a) and b) during the respective crosslinking process is also regulated thanks to the fact that the crosslinking process of component b) only and uniquely starts when the curing component is added to the composition, or to component b). The offset of the thermal peaks is due to the choice of hardener and/or component b). The union between the two must be characterized by a more or less slow reactivity at room temperature; in fact, even if the reaction between hardener and component b) begins as soon as the addition occurs, in a slow system there will be a long initial time in which the reactivity will be very low. If a component b) system is choosen and its component b) hardener is too slow as compared to the temperature that will reach the mass, the two curves will be separate but the final curing of the system will take too long times for the intended use of the formulation.

In this case, the choice of pot-life and hardener is important. In fact, in an operating condition in which the application of the composition on the substrate requires long times and/or complex manipulations or paths to reach the application site, it is advantageous to provide relatively long crosslinking times by the hardener.

The process then precedes the mixing of the hardener to the composition according to step iv) the application of the composition with the mixed hardener of step ii) to the substrate and then the irradiation with the photo-crosslinking radiation of component a) of the already mixed composition hardener. In this case it is important that components a) and b) have exothermic emission curves staggered to each other sufficiently for the use of the substrate, the mass in place and the shape (Fourier's law) and the characteristics required for the composition applied to it.

With reference to the general concept of the present invention, in other words again, said component a) and said component b) are characterized by having two totally or at least partially separate and independent activation moments so that the cross-linking heat of component b) does not overlap or only partially overlaps the heat generated by the photo-crosslinking of component a).

According to a preferred embodiment of the invention, said component a) is completely photo-crosslinked immediately by exposure to actinic light, preferably in a time $\geq$ 1 second, preferably between 1 second and 60 minutes, preferably between 10 seconds and 10 minutes, more preferably in less than 5 minutes.

Preferably, said component b) is characterized by having a pot-life at room temperature $\geq$ 20 minutes, preferably $\geq$ 120 minutes, more preferably $\geq$ 160 minutes, even more preferably $\geq$ 180.

Without being linked to a specific theory, it is however possible to argue that, according to such a preferred embodiment of the invention, it is possible to create a "curing shifting time" between the crosslinks of component a) and component b) long enough to obtain, in relation to the mass, the shape and the specific heat exchange surface of the composition, the advantages and the desired performances in terms of shrinkage and thermal peak reduction according to the present invention.

According to a preferred embodiment, said component b) is characterized by having at least 70% of the reactive groups not yet reacted at the moment in which the mass of component a), once photo-crosslinked by irradiation (step iii)), reaches a temperature defined "interference temperature" (starting point), said temperature being a temperature below at least twice the measured ambient temperature.

Without being linked to a specific theory, it is however possible to argue that such an "interference temperature" is dependent on the heat dissipation time of the component a) which in turn is a function of the measured ambient temperature, of the volume/thickness and the nature of the substrate (i.e. heat exchange coefficient) on which the composition according to the present invention is possibly applied.

According to a particularly preferred embodiment, said component a) and said component b) are used in a volume ratio comprised between 95: 5 and 5:95, preferably between 80:20 and 20:80, more preferably between 80:20 and 50:50, more preferably between 50:50 and 20:80, even more preferably in a volume ratio of about 50:50.

Without being linked to a specific theory, the Applicant has nevertheless found that the aforementioned ratios are particularly effective in generating an interpenetrating or semi-interpenetrating sequential polymer network having the advantages and performance desired in terms of shrinkage and thermal peak reduction when used as or within a composition, preferably when said composition is used in thick masses (eg $\geq$ 0.2 mm up to 30 cm and above).

In order to better understand the importance of the "curing shifting time" between the crosslinks of component a) and component b) it is good here to expose a general principle of interconnection and possible interaction of the crosslinking kinetics between the two photoactive steps and crosslinking after mixing the hardener add-on.

Since the hardener is active at room temperature, there is a close correlation between the reaction kinetics of the two steps, in fact, the first crosslinking reaction of the photoactive part is very fast and very exothermic. According to Fourier's law, the larger the mass and the smaller the heat exchange surface, the greater the exothermy cross-linking heat emitted which will accumulate.

This remarkable reaction heat generation of the photoactive part exponentially accelerates the reaction rate between the hardener and the step, i.e. the non-photoreactive component b) of the composition, just because the hardener is not blocked or latent and therefore is strictly influenced by the temperature.

This reaction acceleration increases the exothermic emission also of the second non-photoactive step which adds to the thermal emission of the photo-crosslinking part, further increasing the thermal accumulation inside the mass and reaching an extremely high total thermal peak in direct proportion to the masses at stake (overlapping of effects of several elementary phenomena).

With the correct formulation modulation given by the choice of the hardener component for the non-photoactive step, i.e. a hardener with a more or less slow action depending on the mass and shape of this mass in relation to the heat exchange surfaces, it is possible to obtain that the thermal emission curves corresponding to the two components a) and b) develop at different times, so that the incipit of the curve relating to the second component b) has a substantial origin in the instant in which the descending curve relating to component a) has reached ordinates lower than 30% of the thermal peak of the curve corresponding to component a) and in such a way that said thermal trend curves have a partial or preferably no overlap.

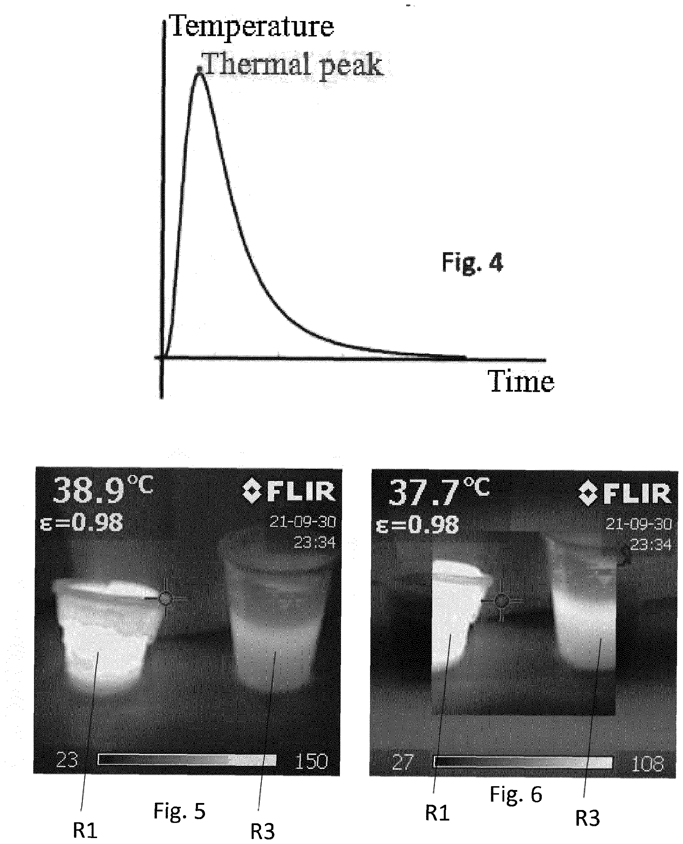

In the qualitative graph of Figure 4, the temperature is measured in degrees Celsius, the thermal peak is of the order of a few tens of degrees and is a function of the mass being crosslinked. The time on the abscissa is measured in seconds and the peak, for a mass of 0.100 kg of compound, is reached usually in less than thirty seconds. The curves of both components show similar trends, which have been deduced through experimental measurements. The thermal emission can be expressed through the general Fourier's law, except the following premises and considerations:

from the experimental observation of thermal phenomena it has been found that the heat exchange between bodies, having different temperatures, is a complex phenomenon, generally consisting of the overlapping of the effects of several elementary phenomena each of which can have a prevalent or marginal role depending on the properties of the medium in which the heat transmission takes place;

Fourier's law in the case in question takes a complex form as the heat transmission depends on various parameters, including:

thermal conductivity,

total mass of the reactants

thickness of the crosslinking layer

duration of the process;

heat conduction is a diffusive phenomenon, the underlying physical mechanism is linked to molecular motions at the microscopic level.

There is a fundamental law that binds, in its simplest and most essential formulation, the heat flow by conduction to the temperature gradient, Fourier's law which expresses how the heat flow has the same direction as the temperature gradient and opposite direction. The conductivity coefficient that appears in it is positive. In the case of a very simple system, consisting of a flat sheet of homogeneous material (structure of the material uniform in each point) and isotropic (physical properties independent of the direction), the heat transmission law takes the simplified form $\frac{dQ}{dt} = -\lambda\, S\, \frac{dT}{dx}$ , in which the first member expresses the speed with which the heat dissipates over time, the minus sign indicates that the heat flow has the same direction as the thermal gradient but opposite, $\lambda$ is the thermal conductivity coefficient, S the surface of the sheet through which the heat is transmitted and dT/dx expresses the speed with which the temperature varies as compared to the thickness of the sheet.

This equation appears to be a simplification of the case under consideration in this context and it is therefore imperative to make the following corrections:

a) refer the equation to the heat transmission in a three-dimensional volume element, rather than through a one-dimensional plate: this will be expressed by introducing the three spatial variables, and expressing the final law through partial derivatives;

b) it is necessary to refer the temperature trend T not only to the spatial variable but also to the mass of the volume element considered, since the thermal gradient in the crosslinking process cannot ignore the entity of the mass involved.

According to an embodiment, preferably, said component a) comprises:

a') at least one photo-crosslinkable resin selected in the group consisting of an acrylic, methacrylate, unsaturated polyester, acrylate polyester, methacrylate polyester, epoxy acrylate, polyurea acrylate, bisphenol acrylic, vinyl, vinyl ester, vinyl ether, polyether acrylate resin, and a combination thereof; and

a'') at least one photo-initiator compound that can be photoactivated by irradiation with an actinic light source having a wavelength between 100 and 600 nm.

Preferably said component b) comprises:

b') at least one resin selected in the group consisting of an epoxy, oxirane, oxethane, polyurethane, cycloaliphatic epoxy resin, and a combination thereof;

b'') at least one compound curing at room temperature whose cross-linking action does not depend on the presence and/or persistence of irradiation in step iii).

According to a preferred embodiment, said at least one photoactivable photoinitiator compound a'') is present in an amount comprised between 0.00001 and 20% by weight, preferably between 0.01 and 5% by weight, more preferably between 0.01 and 3% by weight as compared to the total weight of the composition.

Preferably said at least one photoactivable photoinitiator compound is a radical photoinitiator, more preferably a type I, II or III radical photoinitiator selected from: $\alpha$-aminoketone, acylophosphine oxide, preferably 2,4,6-trimethylbenzolyl diphenyl phosphine oxide and bis-(2,6,dimethoxybenzoyl)-2,4,4-trimethylphenylphosphine, phenyl glyoxylate, methyl phenyl glyoxylate, benzophenone, thioxanthone, isopropylthioxanthone (ITX), camphorquinone, 1-chloro-4-propoxythioxanthone (CPTX), titanocene, $\alpha$-hydroxyketone, Michler's ketone, $\alpha$, $\alpha$-dimethoxy-2-phenylacetophenone (DMPA), $\alpha$-diethoxy acetophenone, $\alpha$-hydroxy-$\alpha$, $\alpha$-alkyl acetophenone, preferably $\alpha$-hydroxy-$\alpha$, $\alpha$-dimethyl acetophenone, 1-benzoylcyclohexanol, 3-ketocoumarin, and a combination thereof.

Preferably, said at least one photo-crosslinkable resin a') is selected in the group of acrylic or methacrylic esters and consists for instance of: diethylene glycol diacrylate, diethylene glycol dimethacrylate, triethylene glycol dimethacrylate, tetraethylene glycol dimethacrylate, dipropylene glycol dimethacrylate, di-(pentamethylene glycol) dimethacrylate, tetraethylene diglycerol diacrylate, diglycerol tetramethacrylate, tetramethylene dimethacrylate, ethylene dimethacrylate, neopentyl glycol diacrylate, trimethylol propane triacrylate, (meth) acrylic esters of bisphenol A ethoxylate, polyarylamide, polystyrene polyarylamides, unsaturated polyesters, vinyl ether, polyvinyl acetate, polyvinylpyrrolidone, acrylate epoxy monomers (i.e. the reaction products of epoxy compounds or prepolymers with acrylic or methacrylic acids), urethane acrylate prepolymers, polyether acrylate oligomers, polyester acrylate oligomers and a combination thereof.

Preferably said at least one photo-crosslinkable resin a') is selected in the group consisting of: triethylene glycol dimethacrylate, polyethylene glycol dimethacrylate and a combination thereof.

Preferably, said at least one resin b') is selected in the group consisting of: substituted or unsubstituted aliphatic, cycloaliphatic, aromatic and/or heterocyclic polyepoxides such as for instance glycidyl esters, glycidyl ethers, glycidylamines, epoxidized olefins and a combination thereof.

Preferably, in the embodiment in which said polyepoxides are substituted, they are substituted with substituents selected from: halogen and hydroxyl.

According to an embodiment of the invention, the preferred polyepoxides are glycidyl polyethers having equivalent epoxide weights ranging from 175-4000, preferably 175-1200, more preferably 175-700. Said glycidyl polyethers are preferably aromatic and are formed by reacting an epihalohydrin, preferably epichlorohydrin with mononuclear or polynuclear phenols such as 4,4'-isopropylidenediphenol (bisphenol A), 4,4'-isopropylidene bis (2,6-dibromophenol), 1,1,3-tris (p-hydroxyphenyl) propane, 1,1-bis (4-hydroxyphenyl) ethane, 1,1,2,2-tetra (p-hydroxyphenyl) ethane, bis-(4-hydroxyphenyl) methane, 4,4'-dihydroxydiphenyl sulfone, 2,2-bis-(4-hydroxyphenyl)-propane, 2,2-bis-(3,5-dibromo-4-hydroxyphenyl)-propane, hydroquinone, resorcinol, dihydroxyphenyl, dihydroxy naphthalene, phenol-formaldehyde novolac, p-aminophenol and o-cresol-formaldehyde novolac.

According to an embodiment, said at least one resin b') is selected from: polyglycidyl ethers or poly-($\beta$-methylglycidyl) ethers derived from acyclic or cycloaliphatic alcohols, said acyclic alcohols preferably being selected from ethylene glycol, diethylene glycol, higher poly-(oxyethylene) glycols, propane-1,2¬idiol, poly-(oxypropylene) glycols, propane-1,3-diol, butane-1,4-diol, poly-(oxytetramethylene) glycols, pentane-1,5-diol, hexane-1,6-diol, hexane-2,4,6-triol, glycerol, 1,1,1-trimethylolpropane, pentaerythritol, sorbitol and polyepichlorohydrines; said cycloaliphatic alcohols preferably being selected from 1,4-cyclohexanedimethanol, bis-(4-hydroxycyclohexyl)-methane, 2,2-bis-(4-hydroxycyclohexyl)-propane, N,N-bis-(2-hydroxyethyl)-aniline and p, p'-bis-(2-hydroxyethylamino)-diphenylmethane.

According to an embodiment of the invention, the at least one resin b') is a cycloaliphatic epoxy resin selected in the group consisting of: bis-(2,3-epoxycyclopentyl) ether, 2,3-epoxycyclopentyl glycidyl ether, 1,2¬bis-(2,3-epoxycyclopentyloxy)-ethane, 3,4-epoxycyclohexylmethyl 3', 4'-epoxycyclohexanecarboxylate and a combination thereof.

Preferably said at least one resin b') is selected in the group consisting of: bisphenol A diglycidyl ether (DGEBA), bisphenol F diglycidyl ether (DGBF), epoxy cresol novolac, bis-(2,3-epoxycyclopentyl) ether, 2,3- epoxycyclopentyl glycidyl ether, 1,2-bis-(2,3-epoxycyclopentyloxy)-ethane, 3,4-epoxycyclohexylmethyl 3',4'-epoxycyclohexanecarboxylate.

According to a preferred embodiment, said at least one curing compound at room temperature b'') is selected in the group consisting of: 3-bis-(4-aminophenyl)-methane, aniline, formaldehyde, benzylamine, n-octylamine, propane-1,3-diamine, 2,2-dimethyl-1,3-propanediamine, hexamethylenediamine, triethylenetriamine, bis-(3-aminopropyl )-amine, N,N-bis-(3-aminopropryl)-methylamine, triethylenetetramine, tetraethylenepentamine, pentaethylene, 2,2,4-trimethylhexane-1,6-diamine, m-xylylenediamine (MXDA), 1,4-diaminocyclohexane, bis-(4¬5 aminocyclohexyl)-methane, bis-(4-amino-3-trimethylcyclohexylamine, polyaminoimidazolines, polyaminoamides, polyoxyalkyleneamines, pyromellitic dianhydride (PMDA), methyl nadic anhydride (NMA), hexahydrophthalic anhydride (HHPA), chloroendic anhydride, phthalic anhydride, dodecyl succinic anhydride (DDSA), Lewis acids, preferably BCl$_3$, trifluoride complexes, boron monoethylamine trifluoride (BF$_3$-MEA), imidazoles, preferably 2-ethyl-4-methyl-imidazole (EMI), tris-2,4,6-dimethylaminomethyl phenol, tris-(dimethylaminomethyl) phenol, benzyldimethylamine (BDMA), triethanolamine, N,N-dimethyl dipropylene triamine (DMDPTA), amino-n-propyl diethanolamine (APDEA), triphenylphosphine (TPP), polymercaptans, polysulfides, oxalic acid, succinic acid, glutaric acid, adipic acid, pimelic acid, suberic acid, azelaic acid, dimerized or trimerized linoleic acid, tetrahydrophthalic acid, 4-methyltetrahydrophthalic acid, hexahydrophthalic acid, 4-methylhexahydrophthalic acid, phthalic acid, isophthalic acid, terephthalic acid and a combination thereof.

According to an embodiment, the composition of step i) can optionally comprise at least one additive added to component a) and/or to component b), said additive being preferably selected in the group consisting of: an accelerator, a diluent, a pigment, a dye, a flame retardant, a thixotropic agent, a thixotropic adhesion promoter, a plasticizer, an extender, a filler (charges), a reinforcing agent, preferably selected from a mineral silicate, mica, quartz powder, alumina hydrates, glass, bentonite, wollastonite, kaolin, silica airgel; an anti-foaming agent, a leveling agent, an antioxidant, a shielding agent, a flow control agent, preferably selected from a silicone, a wax and a stearate.

According to an embodiment, the process according to the present invention comprises step ii) of impregnating or coating a substrate with the composition of step i).

Preferably, said substrate of step ii) is selected in the group consisting of: an industrial and/or civil building surface, preferably chosen between a flooring, a wall or an internal or external wall; a sheath for relining, preferably said sheath being made of a material chosen from: fiberglass, non-woven fabric, unidirectional or multidirectional non-woven fabric, polymeric felt, an artistic, furnishing and/or design object, such as for instance a table, a piece of furniture, a panel, a seat or a lamp, and a combination thereof.

According to an embodiment, said step ii) is a step of impregnating said substrate with the composition of step i).

According to another embodiment, said step ii) is a step of coating said substrate with the composition of step i). In this case, after said step ii), said substrate is coated with at least one layer comprising or consisting of said composition of step i).

Preferably, said at least one layer has a thickness of $\geq 0.2$ mm, preferably $\geq 0.5$ mm, more preferably $\geq 1$ mm, even more preferably $\geq 2$ mm, even more preferably $\geq 10$ mm.

According to a particularly preferred embodiment, said step ii) is a step for impregnating said substrate with the composition of step i) and said substrate is a sheath for relining. In this case, the process according to the present invention can further comprise, after step ii) as described above, the steps of: ii') inserting said impregnated substrate inside a pipeline to be restored and/or repaired; and ii") expanding or everting, preferably by means of the inversion technique, said substrate against the inner surfaces of the pipeline by applying an air flow, preferably by applying an air flow at constant pressure; and after step iii), it comprises the step of: iii') removing the application of the pressure air flow, preferably after a waiting time $\geq 1$ second, preferably comprised between 1 second and 60 minutes, more preferably comprised between 1 minute and 60 minutes, more preferably comprised between 1 minute and 50 minutes, even more preferably comprised between 10 and 40 minutes.

In other words, according to this embodiment, the process according to the present invention can also be considered as a relining method, that is the non-destructive *in situ* rehabilitation/repair of damaged pipes, downspouts, conduits or water pipes.

According to an embodiment, step iv) of adding the curing component can only take place before the photo-crosslinking step of the photoactive component a).

In particular, this addition of the curing component according to step iv) can take place before step ii) of application to the substrate of the composition according to one or more of the embodiments described above.

According to an embodiment, step ii) of the process according to the present invention, alternatively or in addition to coating a substrate with the composition of step i), comprises the step of filling one or more cavities of (said) substrate with the composition of step i).

Preferably, said cavity is a cavity present on a substrate, preferably on at least one surface.

Preferably, according to this embodiment, said substrate is selected in the group consisting of: an object made of wood, marble or a combination thereof, more preferably said substrate being selected from an artistic, furnishing and/or design object, for the creation of low and high thickness castings such as decorations and structural intersections between various constituents of the object itself, for instance cast on hollow parts of an artistic, furnishing and/or design object such as a table, a piece of furniture, a panel, a seat, a lamp, and a combination thereof.

According to any of the embodiments described above, the actinic light source of step iii) can be selected in the group consisting of: a broad spectrum UV lamp, a visible light lamp, a UV LED, a visible LED, and a combination thereof.

The present invention also relates to a sequential interpenetrating or semi-interpenetrating polymer network obtainable with the process as previously described.

The present invention also relates to the use of the aforementioned sequential interpenetrating or semi-interpenetrating polymer network to reduce shrinkage and limit exothermy when used as or comprised within a composition, said composition being selected in the group consisting of: an adhesive, a sealant, a coating for substrates, preferably for repairing or smoothing substrates, preferably said substrates being industrial or civil building surfaces such as for instance a wall and/or a floor, a dipping resin, a casting resin, preferably transparent or semitransparent for the realization of furnishing, design and/or artistic objects such as for instance tables, furniture, panels, chairs, lamps; an impregnating resin, preferably for impregnating sheaths for use in the relining or "no-dig" field, a laminating resin, a matrix resin, a mold resin and a combination thereof.

Without being linked to a specific theory, the Applicant has nevertheless found that the present invention advantageously allows to reduce the total reaction exothermy for the same mass and, consequently, not only to decrease the increase in volume of the mass being crosslinked thanks to the lower temperatures reached by the system, but also to reduce the possible damage to heat-sensitive surfaces possibly in contact with the mass being crosslinked.

The present invention also makes it possible to reduce the final overall shrinkage of the crosslinked mass while also decreasing internal stresses to the mass itself.

A further and additional advantage is that it allows to reach the minimum functionality required for the foreseen application, obtained already only with the first crosslinking of the UV step, while the continuation of the crosslinking will proceed by itself without further action by the operator, allowing the product to achieve mechanical strengths at least equal to, if not superior, to the analogous formulation in the prior art which is entirely composed of the crosslinkable step by exposure to light.

The minimum required functionality varies according to the intended use of the formulation, for instance: In the multi-layer coating of a building flooring, the minimum functionality will be walkability immediately after exposure to UV radiation which allows the operator to apply a new resinous layer, trampling with his feet the previous layer applied already sufficiently hardened thus reducing the time and costs.

In a formulation intended to create models for casting in molds, the minimum functionality is the retention of the shape to allow the demoulding from the mold with reduction of times and costs.

In a high thickness decorative filler casting, the minimum expected functionality is the transformation into an already stable and unalterable solid, which can also allow handling before the subsequent curing of step b).

In a relining system, the minimum expected functionality can be constituted by the re-commissioning of the repaired pipeline, with an increase in the subsequent additional resistances.

In an application intended to be smoothed, milled and/or machined with mechanical tools, the minimum consistency sufficient to workability with the tools provided will be achieved with the advantage of being soft and easily machinable with less wear of the machining tools and cost savings, until the final curing continues.

Therefore, the use of the aforementioned sequential interpenetrating or semi-interpenetrating polymer network is particularly advantageous in the case of very thick masses (e.g. $\geq 0.2$ mm up to 30 cm and beyond) which, as is known, generate large quantities of heat during crosslinking as it effectively allows to reduce and limit the total exothermic reaction (i.e. decrease and limit the total thermal peak reached by the system) and, once crosslinking has taken place, the total shrinkage of these masses.

In the embodiment wherein the present invention is applied in adhesive systems, the present invention allows to reduce the stresses at the adhesive system/substrate interface due to variations in the volume of the adhesive mass during crosslinking, thus effectively improving the adhesion performance.

In the embodiment wherein the present invention is applied in wall and/or floor coverings where there is a need for different layers of material, the present invention, by reducing the shrinkage and the thermal peak, allows to eliminate the problems due to the tension of the coatings on the substrates which can cause exfoliation and/or cracks in the continuity of the coatings on the substrates which are not very cohesive.

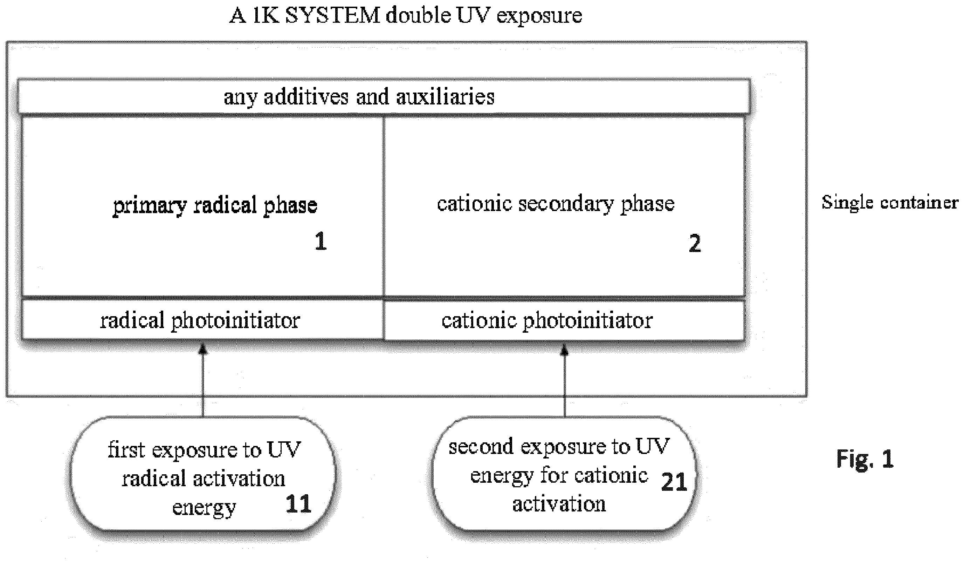

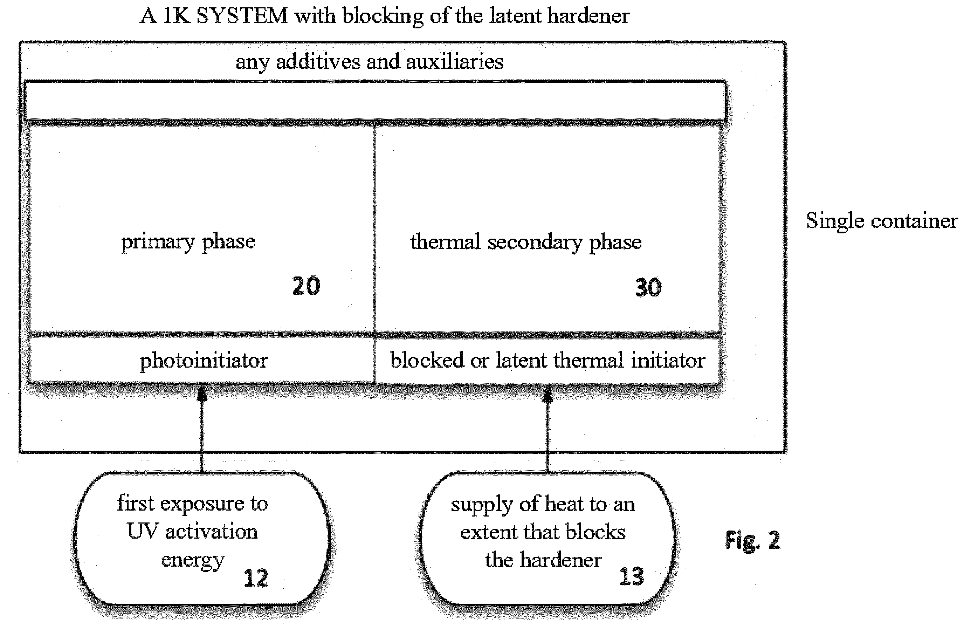

With reference to figures 1 to 3, these show dual curing systems and processes respectively according to the prior art in figures 1 and 2 and according to the present invention in figure 3.

With reference to Figure 1, the system is a dual curing system with double exposure to UV radiation. The composition comprises two components a) and b) said components being each photo-crosslinkable with a UV radiation having a frequency or a range of frequencies different from each other.

The process involves a first radical step which acts with a radical photoinitiator 1 and a second cationic step which operates with a cationic photo initiator 2. A first exposure to UV radical activation energy 11 and a second exposure to UV energy for cationic activation 21 are provided. The composition is contained in a single common container for both components a) and b). The composition can also comprise further additives and/or auxiliaries, if any, according to one or more of the embodiments described above.

With reference to Figure 2, the system is a dual curing system which operates with a first crosslinking step by means of UV crosslinking energy and a second crosslinking step by means of a thermally activatable hardener.

The composition comprises two components a) and b), said components being a first photo-crosslinkable component with a UV activation radiation. A second component b) of the composition comprises a blocked or latent thermal photo initiator, such as a thermally blocked or latent hardener.

The process involves a first step 20 which operates with a UV photo initiator and a second step 30 which operates with a blocked or latent thermal photo initiator. A first exposure to UV activation energy 12 and a second exposure to thermal energy of release or activation of the hardener 13 are foreseen. The composition is contained in a single container common for both components a) and b). The composition can also comprise further additives and/or auxiliaries, if any, according to one or more of the embodiments described above.

Figure 3 shows a scheme analogous to Figures 1 and 2 in which an embodiment of the present invention is represented. In a first container is contained the composition formed by said components a) and b) which are respectively a photo-crosslinkable component comprising a photo-crosslinker and which is subjected to a primary step 300 of exposure to UV activation energy 340 of the crosslinking process. The second component b) is intended for a secondary crosslinking step 310. This takes place due to an additive consisting of a hardener 320 which acts and therefore is already active at room temperature.

The second crosslinking step 310 takes place thanks to an *in situ* mixing of the hardener 320 with the component b) 330 of the second crosslinking step 310. The hardener 320 is contained in a separate container. Alternatively, the hardener 320 can be contained in a separate sealed compartment and dedicated to it in a single container intended to also accommodate the composition of components a) and b) .

EXPERIMENTAL EXAMPLE

The following experimental example is for demonstration purposes only and should not be considered in any way limiting the broader general characteristics of the embodiments of the present invention.

As a practical demonstration, we proceed to an experiment involving high masses with insufficient heat exchange surfaces to effectively remove the reaction heat.

Two samples are formulated:

R1 (prior art - single step entirely photo reactive)

Reference sample to represent the prior art by formulating a non-ipn radical-only system for comparison consisting mainly of an acrylic acid ester (TMPTA) with the addition of a photoinitiator and synergists.

R3 (Mixed semi-ipn formulation according to the present invention in the ratio 50:50) for the verification of the drastic reduction of the thermal peak and of the internal deformations on high thicknesses

Preliminary formulations:

FULLY PHOTOREACTIVE FORMULATION Recipe RR

| Trimethylolpropane triacrylate | 186.64g | acrylate monomer |
|---|---|---|
| Photomer 4967 (IGM Resins) | 9.82g | synergistic acrylate |
| Bis(2,4,6-trimethylbenzoyl) phenylphosphine oxide | 0.30g | radical photo initiator |
| 2-hydroxy-2-methyl-1-phenylpropanone | 3.0g | radical photo initiator |

ENTIRELY NON-PHOTORECTIVE FORMULATION Recipe BB

| Bisphenol A diglycidyl ether (DGEBA) | 100g | epoxy resin of liquid type 190 equivalent |
|---|---|---|
| Ancamide 2443 | 40g | (Evonik Industries commercial epoxy hardener with long Pot-life) |

Preparation of the samples

R1: pour RR as it is in a small glass 100gr RR Recipe Fully reactive formulation MIXED FORMULATION according to the present invention

R3: are used:

50 g of Fully Photoreactive Formulation (RR Recipe)

50 g of Fully non-photoreactive formulation (Recipe BB)

**DESCRIPTION OF THE Comparative test**

The samples are simultaneously irradiated by a 405 nm wavelength LED lamp placed at a distance of 20 cm from the upper surface of the samples for a continuous 6 minutes time and the thermal peak reached by the two samples is calculated.

Thermal peak reached by the sample R1 238°C

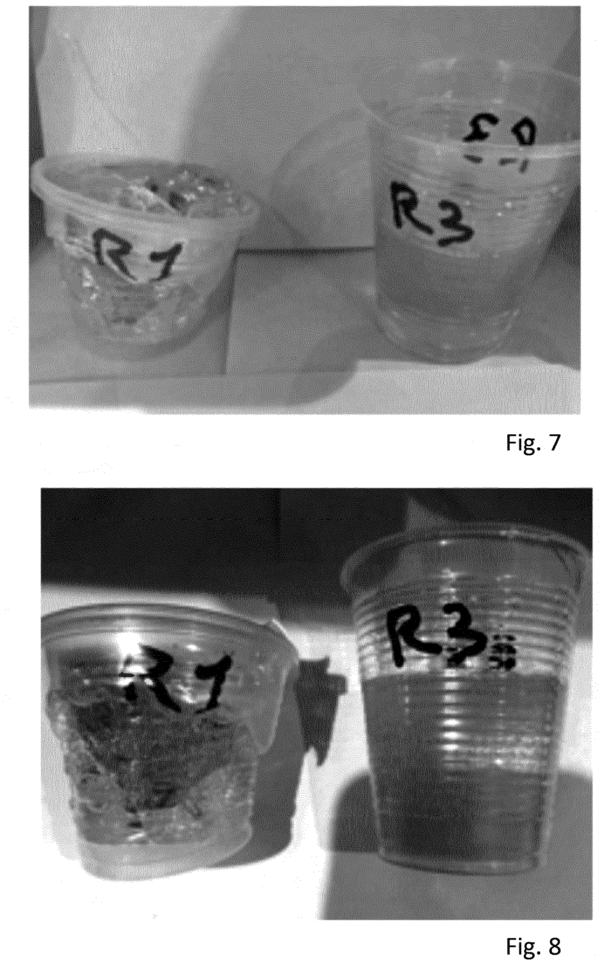

Thermal peak reached by the sample R3 108°C Figures 6 and 7 show the infrared thermogram during irradiation where the drastic difference in exothermy temperature between the two samples R1 on the left and R3 on the right is highlighted. Figures 8 to 9 show the difference in deformation between samples R1 and R3 from which the presence of lesions in sample R1 due to internal tensions during cross-linking and cooling due to excess thermal peak in sample R1 are evident according to the state of the art.

**SHRINKAGE TEST**

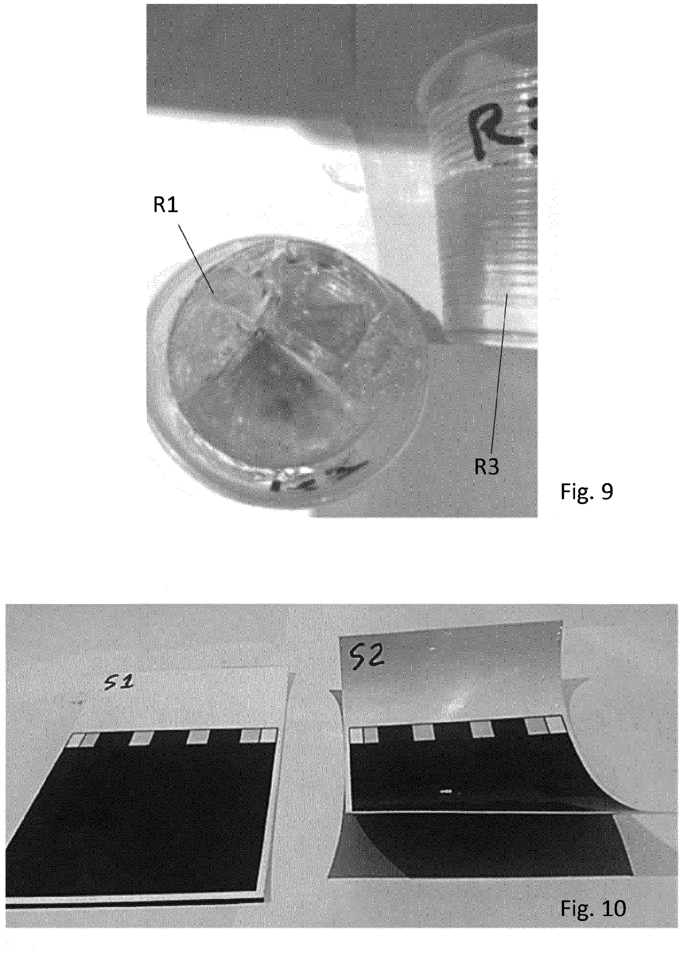

Figure 10 shows, respectively, for the sample S1 according to the present invention and the sample S2 according to the state of the art, the outcome of the shrinkage test.

S1 - 30 g of fully photoreactive formulation RR 70 g of fully non-photoreactive formulation BB

S2 - Reference sample with fully photoreactive formulation, RR composition

Test description:
the two samples are applied in equal quantities on matching cards and simultaneously irradiated by a 405 nm wavelength LED lamp placed at a distance of 20 cm from the upper surface of the samples for a continuous 3 minutes time.
The result is shown in the picture of figure 10 in which the deformation due to shrinkage of the non-lpn S2 sample is visually evident.
It is worth remembering here that the greater the thickness applied, the greater the shrinkage of the sample S2 which represents the prior art compared to the sample prepared according to the present invention S1.

**Claims**

1. A process for producing a sequential interpenetrating polymer network or a sequential semi-interpenetrating polymer network comprising the steps of:

   i) providing a composition comprising:

   a component a) photo-crosslinkable by actinic light irradiation to which a composition is added comprising;
   a component b) crosslinkable by addition and optionally
   mixing of at least one curing compound;

   said component b) being **characterized by** possessing a curing shifting time as compared to component a) such that the curves, in particular Gaussian, of exothermic emission of components a) and b) have a partial or no overlap;
   ii) impregnating or coating a substrate and/or filling one or more cavities thereof with the composition of step i), or in any case applying the composition of step i) to a substrate;
   iii) irradiating the composition of step i) or the substrate of step ii) with an actinic light source for a time of $\geq 1$ second preferably comprised between 1 minute and 60 minutes, more preferably comprised between 1 minute and 60 minutes, more preferably comprised between 1 minute and 50 minutes, even more preferably comprised between 10 and 40 minutes;
   iv) mixing said at least one curing compound to the composition, said at least one curing compound activating a crosslinking step of component b) at room temperature and in which said crosslinking step of compound b) induced by said curing compound has a predetermined time duration (Pot-life);

   while said mixing of step iv) takes place before or after step ii) and/or with a curing shifting time as compared to component a) such that the curves, in particular Gaussian, of exothermic emission of the components a) and b) have partial or no overlap.

2. The process according to claim 1 wherein said exothermic emission curves of components a) and b) have an overlap percentage of between 0 and 30%, preferably comprised between 0 and 10%, more preferably comprised between 0 and 5%.

3. The process according to claim 1 or 2 wherein

said component a) is completely photo-crosslinked immediately upon actinic light exposure, preferably in a time ≥ 1 second, preferably comprised between 1 second and 60 minutes, more preferably comprised between 10 seconds and 10 minutes, more preferably less than 5 minutes; and
said component b) is **characterized by** a pot-life at room temperature ≥ 20 minutes, preferably ≥ 120 minutes, more preferably ≥ 160 minutes, even more preferably ≥180 minutes.

4. The process according to any one of the preceding claims wherein said component a) and said component b) are used in a volume ratio comprised between 95:5 and 5:95, preferably comprised between 80:20 and 20:80, more preferably comprised between 80:20 and 50:50, more preferably comprised between 50:50 and 20:80, even more preferably in a volume ratio of 50:50.

5. The process according to any one of the preceding claims wherein said component a) comprises:

a') at least one photo-crosslinkable resin selected in the group consisting of an acrylic, methacrylic, unsaturated polyester, acrylate polyester, methacrylate polyester, epoxy acrylate, polyurea acrylate, bisphenol acrylic, vinyl, vinyl ester, vinyl ether, polyether acrylate resin, and a combination thereof;
a'') at least one photo-initiator compound that can be photoactivated by irradiation with an actinic light source having a wavelength between 100 and 600 nm;

and wherein said component b) comprises:

b') at least one resin selected in the group consisting of an epoxy, oxirane, oxethane, polyurethane, cycloaliphatic epoxy resin, and a combination thereof;
b'') at least one curing compound at room temperature whose cross-linking action does not depend on the presence and/or persistence of the irradiation of step iii).

6. The process according to claim 5 wherein said at least one photoinitiator compound a") is present in an amount comprised between 0.00001 and 20% by weight, preferably comprised between 0.01 and 5% by weight, plus preferably comprised between 0.01 and 3% by weight as compared to the total weight of the composition.

7. The process according to claim 5 or 6 wherein said at least one photoactivable photoinitiator compound is a radical photoinitiator, preferably a type I, II or III radical photoinitiator selected from:

$\alpha$-aminoketone, acylophosphine oxide, preferably 2,4,6 ¬trimethylbenzolyl diphenyl phosphine oxide and bis-(2,6-dimethoxybenzoyl)-2,4,4-trimethylphenylphosphine, phenyl glyoxylate, methyl phenyl glyoxylate, benzophenone, thioxantone,
isopropylthioxanthone (ITX), camphoroquinone, 1-chloro-4-propoxy tioxanthone (CPTX), titanocene, $\alpha$-hydroxyketone, Michler's ketone,
$\alpha$, $\alpha$-dimethoxy-2-phenylacetophenone (DMPA), $\alpha$-diethoxy acetophenone, $\alpha$-hydroxy-$\alpha$, $\alpha$-alkyl acetophenone, preferably $\alpha$-hydroxy-a, $\alpha$-dimethyl acetophenone, 1-benzoylcyclohexanol, 3-ketocoumarin, and a combination thereof.

8. The process according to any one of claims 5 to 7, wherein said at least one photo-crosslinkable resin a') is selected in the group consisting of: diethylene glycol dimethacrylate, triethylene glycol dimethacrylate, tetraethylene glycol dimethacrylate, dipropylene glycol dimethacrylate, di-(pentamethylene glycol) dimethacrylate, tetraethylene diglycerol diacrylate, diglycerol tetramethacrylate, tetramethylene dimethacrylate, ethylene dimethacrylate, neopentyl glycol diacrylate, trimethylol propane triacrylate, (meth) acrylic esters of bisphenol A ethoxylate, polyarylamide, polystyrene polyarylamides, unsaturated polyesters, vinyl ether, polyvinyl acetate, polyvinyl pyrrolidone, acrylate epoxy monomers (i.e. the reaction products of epoxy compounds or prepolymers with acrylic or methacrylic acids), urethane acrylate prepolymers, polyether acrylate oligomers, polyester acrylate oligomers and a combination thereof.

9. The process according to any one of claims 5 to 8 wherein said at least one resin b') is selected in the group consisting of: bisphenol A diglycidyl ether (DGEBA), bisphenol F diglycidyl ether (DGBF), epoxy cresol novolac, bis-(2,3-epoxycyclopentyl) ether, 2,3-epoxycyclopentyl glycidyl ether, 1,2-bis-(2,3-epoxycyclopentyloxy)-ethane, 3,4-epoxycyclohexylmethyl 3', 4'-epoxycyclohexanecarboxylate.

10. The process according to any one of claims 5 to 9 wherein said at least one curing compound at room temperature b'') is selected from: bis-(4-aminophenyl)-methane, aniline, formaldehyde, benzylamine, n-octylamine, propane-1,3-diamine, 2,2-dimethyl-1,3-propanediamine, hexamethylenediamine, triethylenetriamine, bis-(3-aminopropyl)-amine, N,N-bis-(3-aminopropril)-methylamine, triethylenetramine, tetraethylenepentamine, pentaethylene, 2,2,4-trimethylhexane-1,6-diamine, m-xylylenediamine (MXDA), 1,4-diaminocyclohexane, bis-(4-aminocyclohexyl)-methane, bis-(4-amino-3-trimethylcyclohexylamine), polyaminoimidazolines, polyaminoamides, polyoxyalkyleneamines, pyromellitic dianhydride (PMDA), methyl nadic anhydride (NMA), hexahydrophthalic anhydride (HHPA), chloroendic anhydride, phthalic anhydride, dodecyl succinic anhydride (DDSA), Lewis acids, preferably $BCl_3$, trifluoride complexes, monoethylamine boron trifluoride (BF$_3$-MEA) imidazoles, preferably 2 ethyl-4-methyl-imidazole (EMI), tris-2,4,6-dimethylaminomethyl phenol, tris-(dimethylaminomethyl) phenol, benzyldimethylamine (BDMA), triethanolamine, N, N-dimethyldipropylenetriamine (DMDPTA), amino-n-propyldiethanolamine (APDEA), triphenylphosphine (TPP), polymercaptans, polysulfides, oxalic acid, succinic acid, glutaric acid, adipic acid, pimelic acid, suberic acid, azelic acid , dimerized or trimerized linoleic acid,
tetrahydrophthalic acid, 4-methyltetrahydrophthalic acid, hexahydrophthalic acid, 4-methylhexahydrophthalic acid, phthalic acid, isophthalic acid, terephthalic acid and a combination thereof.

11. The process according to any one of the preceding claims wherein said actinic light source is selected from: a broad spectrum UV lamp, a visible light lamp, a UV LED, a visible LED, and a combination thereof.

12. The process according to any one of the preceding claims wherein said substrate of step ii) is selected in the group consisting of:

   a building surface of an industrial and/or civil type, preferably selected from a flooring, an internal or external wall; a sheath for relining, preferably made of a material selected from: fiberglass,
   non-woven fabric, unidirectional or multidirectional non-woven fabric, polymer felt, an artistic, furnishing and/or design object,
   and a combination thereof.

13. The process according to any one of the preceding claims, wherein, after step ii) said substrate is impregnated with the composition obtained in step i) or coated with at least one layer comprising or consisting of said composition, said at least one layer having a thickness $\geq$ 0.2 mm, preferably $\geq$ 0.5 mm, more preferably $\geq$ 1 mm, even more preferably $\geq$ 2 mm, even more preferably $\geq$ 10 mm.

14. The process according to any one of the preceding claims wherein, when step ii) is a step of impregnating said substrate with the composition of step i), said substrate is a sheath for relining and said process further comprises, after step ii ), the steps of:

   ii') inserting said impregnated substrate inside a pipeline to be restored and/or repaired; and
   ii'') expanding or everting, preferably by means of the inversion technique, said substrate against the inner surfaces of the pipeline by applying an air flow, preferably by applying a constant pressure air flow; and after step iii), comprises the step of:

   iii') removing the application of the pressure air flow, preferably after a waiting time $\geq$ 1 second, preferably comprised between 1 second and 60 minutes, more preferably comprised between 1 minute and 60 minutes, more preferably comprised between 1 minute and 50 minutes, even more preferably comprised between 10 and 40 minutes.

15. A sequential interpenetrating polymer network or a sequential semi-interpenetrating polymer network obtainable with the process according to any one of claims 1 to 14.

16. A use of a sequential interpenetrating polymer network or a sequential semi-interpenetrating polymer network according to claim 15 as an adhesive, sealant, coating of substrates, preferably selected from industrial or civil type building surfaces, artistic, furnishing and/or design objects, dipping resin, pouring resin, impregnating resin, preferably for impregnating sheaths for relining, lamination resin, matrix resin, resin for molds and a combination thereof.

## A 1K SYSTEM double UV exposure

| any additives and auxiliaries | |
| --- | --- |
| primary radical phase<br><br>**1** | cationic secondary phase<br><br>**2** |
| radical photoinitiator | cationic photoinitiator |

Single container

first exposure to UV radical activation energy  **11**

second exposure to UV energy for cationic **21** activation

**Fig. 1**

EP 3 978 553 A1

A 1K SYSTEM with blocking of the latent hardener

| any additives and auxiliaries | |
|---|---|
| | |
| primary phase **20** | thermal secondary phase **30** |
| photoinitiator | blocked or latent thermal initiator |

Single container

first exposure to UV activation energy **12**

supply of heat to an extent that blocks the hardener **13**

**Fig. 2**

# A 2K SYSTEM

Fig. 3

Fig. 4

Fig. 5

R1                R3

Fig. 6

R1                R3

Fig. 7

Fig. 8

Fig. 9

Fig. 10

Europäisches
Patentamt

European
Patent Office

Office européen
des brevets

# EUROPEAN SEARCH REPORT

**Application Number**

EP 21 20 0852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201906<br>18 May 2021 (2021-05-18)<br>Thomson Scientific, London, GB;<br>AN 2018-90592A<br>XP002803006,<br>& CN 108 753 228 A (ZHEJIANG NAVIGATION BOAT NEW MSTAR TECHNOLOGY LTD)<br>6 November 2018 (2018-11-06)<br>* abstract * | 1-16 | INV.<br>C08J3/24 |
| X | WO 2005/056675 A1 (LORD CORP [US])<br>23 June 2005 (2005-06-23)<br>* paragraphs [0061] - [0067]; tables * | 1-16 | |
| X | WO 03/011971 A1 (VANTICO AG [CH]; SETIABUDI FRANS [DE])<br>13 February 2003 (2003-02-13)<br>* claims; examples; tables * | 1-16 | |
| X | US 2007/205528 A1 (PATEL RANJANA C [GB] ET AL) 6 September 2007 (2007-09-06)<br>* paragraphs [0189] - [0191]; tables * | 1-16 | **TECHNICAL FIELDS SEARCHED (IPC)**<br><br>C08J |
| X | US 10 106 643 B2 (3M INNOVATIVE PROPERTIES CO [US]) 23 October 2018 (2018-10-23)<br>* column 20, lines 23-39; claims 1,2; examples 1,2; tables *<br>* column 1, lines 5-15 * | 1-16 | |

-/--

The present search report has been drawn up for all claims

| Place of search | Date of completion of the search | Examiner |
|---|---|---|
| Munich | 17 February 2022 | Frison, Céline |

Europäisches
Patentamt

European
Patent Office

Office européen
des brevets

## EUROPEAN SEARCH REPORT

Application Number

EP 21 20 0852

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK Y-J ET AL: "UV- and thermal-curing behaviors of dual-curable adhesives based on epoxy acrylate oligomers", INTERNATIONAL JOURNAL OF ADHESION AND ADHESIVES, ELSEVIER, AMSTERDAM, NL, vol. 29, no. 7, 1 October 2009 (2009-10-01), pages 710-717, XP026283676, ISSN: 0143-7496, DOI: 10.1016/J.IJADHADH.2009.02.001 [retrieved on 2009-02-10] * Abstract, Experimental; table 1 * ----- | 1-16 | |
| X | US 7 923 121 B2 (SHAWCOR LTD [CA]) 12 April 2011 (2011-04-12) * column 1, lines 35-54; claims * * column 11, lines 30-49 * ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 17 February 2022 | Frison, Céline |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 2 of 2

## ANNEX TO THE EUROPEAN SEARCH REPORT
## ON EUROPEAN PATENT APPLICATION NO.

EP 21 20 0852

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | | | Publication date | Patent family member(s) | | | Publication date |
|---|---|---|---|---|---|---|---|
| CN 108753228 | A | | 06-11-2018 | NONE | | | |
| WO 2005056675 | A1 | | 23-06-2005 | CN | 1946795 | A | 11-04-2007 |
| | | | | EP | 1694769 | A1 | 30-08-2006 |
| | | | | JP | 2007515785 | A | 14-06-2007 |
| | | | | KR | 20070000399 | A | 02-01-2007 |
| | | | | WO | 2005056675 | A1 | 23-06-2005 |
| WO 03011971 | A1 | | 13-02-2003 | AT | 355330 | T | 15-03-2006 |
| | | | | DE | 60218480 | T2 | 31-10-2007 |
| | | | | EP | 1414902 | A1 | 06-05-2004 |
| | | | | ES | 2278949 | T3 | 16-08-2007 |
| | | | | US | 2004234773 | A1 | 25-11-2004 |
| | | | | US | 2007184281 | A1 | 09-08-2007 |
| | | | | WO | 03011971 | A1 | 13-02-2003 |
| US 2007205528 | A1 | | 06-09-2007 | AT | 527099 | T | 15-10-2011 |
| | | | | CA | 2557226 | A1 | 06-10-2005 |
| | | | | CN | 1933961 | A | 21-03-2007 |
| | | | | EP | 1727663 | A1 | 06-12-2006 |
| | | | | ES | 2374823 | T3 | 22-02-2012 |
| | | | | JP | 4776616 | B2 | 21-09-2011 |
| | | | | JP | 2007530724 | A | 01-11-2007 |
| | | | | KR | 20070005638 | A | 10-01-2007 |
| | | | | KR | 20130026535 | A | 13-03-2013 |
| | | | | PL | 1727663 | T3 | 30-04-2012 |
| | | | | TW | I406086 | B | 21-08-2013 |
| | | | | US | 2007205528 | A1 | 06-09-2007 |
| | | | | WO | 2005092598 | A1 | 06-10-2005 |
| US 10106643 | B2 | | 23-10-2018 | CN | 107454871 | A | 08-12-2017 |
| | | | | EP | 3277495 | A1 | 07-02-2018 |
| | | | | JP | 2018512307 | A | 17-05-2018 |
| | | | | KR | 20170125998 | A | 15-11-2017 |
| | | | | TW | 201702058 | A | 16-01-2017 |
| | | | | US | 2016288450 | A1 | 06-10-2016 |
| | | | | WO | 2016160560 | A1 | 06-10-2016 |
| US 7923121 | B2 | | 12-04-2011 | AR | 059657 | A1 | 23-04-2008 |
| | | | | AT | 554130 | T | 15-05-2012 |
| | | | | CA | 2659548 | A1 | 07-02-2008 |
| | | | | CA | 2908284 | A1 | 07-02-2008 |
| | | | | CN | 101495561 | A | 29-07-2009 |
| | | | | DK | 2046887 | T3 | 14-05-2012 |
| | | | | EP | 2046887 | A1 | 15-04-2009 |
| | | | | EP | 2457949 | A1 | 30-05-2012 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

**EP 21 20 0852**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-02-2022**

| Patent document cited in search report | Publication date | Patent family member(s) | | Publication date |
|---|---|---|---|---|
| | | ES | 2382122 T3 | 05-06-2012 |
| | | PL | 2046887 T3 | 28-09-2012 |
| | | US | 2008045619 A1 | 21-02-2008 |
| | | US | 2010222447 A1 | 02-09-2010 |
| | | WO | 2008014597 A1 | 07-02-2008 |

For more details about this annex : see Official Journal of the European Patent Office, No. 12/82

**page 2 of 2**

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108753228
- WO 2005056675 A
- WO 03011971 A
- US 2007205528 A
- US 10106643 B
- US 7923121 B

**Non-patent literature cited in the description**

- UV-and thermal-curing behaviors of dual curable adhesives based on epoxyacrylate oligomers. **PARK YJ et al.** International Journal of Adhesion and Adhesives. Elsevier, 01 October 2009, vol. 29, 710-717